# EUROPÄISCHE PATENTSCHRIFT

(11) **EP 1 779 613 B1**
(45) Veröffentlichungstag und Bekanntmachung des Hinweises auf die Patenterteilung: **02.06.2010**
(21) Anmeldenummer: 05779200.4
(22) Anmeldetag: 03.08.2005
(51) Int. Cl.: H04L 12/56

(54) **AUFBAU EINES DRAHTUNGEBUNDENEN NETZES UNTER ERMITTLUNG UND NUTZUNG LOKALER TOPOLOGIE-INFORMATION**
SETUP OF A WIRELESS NETWORK BY DETERMINING AND USING LOCAL TOPOLOGY INFORMATION
CONFIGURATION D'UN RESEAU SANS FIL AVEC DETERMINATION ET EXPLOITATION D'INFORMATIONS DE TOPOLOGIE LOCALE

(30) Priorität: 18.08.2004 DE 102004040070
(43) Veröffentlichungstag der Anmeldung: 02.05.2007
(73) Patentinhaber: SIEMENS AKTIENGESELLSCHAFT, 80333 München (DE)
(72) Erfinder: BAHR, Michael, 81827 München (DE); KUTSCHENREUTER, Matthias, 80809 München (DE)
(86) Internationale Anmeldenummer: PCT/EP2005/053794
(87) Internationale Veröffentlichungsnummer: WO 2006/018383

(56) Entgegenhaltungen:
- US-A1- 2002 044 549
- C. PETRIOLI ET AL: "Configuring BlueStars: Multihop Scatternet Formation for Bluetooth Networks" IEEE TRANSACTIONS ON COMPUTERS, [Online] Bd. 52, Nr. 6, Juni 2003 (2003-06), Seiten 779-790, XP002354669 Gefunden im Internet: URL:http://ieeexplore.ieee.org/xpl/tocresu lt.jsp?isYear=2003&isnumber=27129&Submit32 =Go+To+Issue> [gefunden am 2005-11-17]
- SALONIDIS T ET AL: "Distributed topology construction of bluetooth personal area networks" PROCEEDINGS IEEE INFOCOM 2001. THE CONFERENCE ON COMPUTER COMMUNICATIONS. 20TH. ANNUAL JOINT CONFERENCE OF THE IEEE COMPUTER ANDCOMMUNICATIONS SOCIETIES. ANCHORAGE, AK, APRIL 22 - 26, 2001, PROCEEDINGS IEEE INFOCOM. THE CONFERENCE ON COMPUTER COMMUNI, Bd. VOL. 1 OF 3. CONF. 20, 22. April 2001 (2001-04-22), Seiten 1577-1586, XP010538850 ISBN: 0-7803-7016-3

## Beschreibung

Die vorliegende Erfindung betrifft ein Verfahren zum Aufbau eines drahtungebundenen Netzes unter Ermittlung und Nutzung lokaler Topologie-Information.

Die drahtgebundene Netztechnologie zur Übertragung von Daten zwischen mehreren Kommunikationsgeräten ist mit Mobilitäts-und somit auch mit Komforteinbußen verbunden. Im Gegensatz dazu können bei der drahtungebundenen Netztechnologie Daten über kurze Distanzen übertragen werden, ohne Einschränkungen bei der Mobilität unterworfen zu sein. Die Kommunikationsgeräte können sich hierzu spontan und autonom verbinden.

Bei einem ersten Verfahren erhält ein erstes Kommunikationsgerät zunächst eine Liste mit den weiteren Kommunikationsgeräten, mit denen es sich verbinden kann. Durch schrittweises Vorgehen in der Liste oder manuelle Manipulation entscheidet das erste Kommunikationsgerät, bei welchem weiteren Kommunikationsgerät es den Aufbau einer Verbindung anfordert.

Bei einem zweiten Verfahren (Specification of the Bluetooth System, Version 1.2, Core) zum Aufbau eines drahtungebundenen Netzes wird bei Kommunikationsgeräten zwischen einem Kommunikationssteuergerät, das die Steuerung der Kommunikation übernimmt, und einem Kommunikationsgerät, das vom Kommunikationssteuergerät gesteuert wird, unterschieden. Im allgemeinen können sich zwei Kommunikationssteuergeräte oder zwei gesteuerte Kommunikationsgeräte nicht miteinander verbinden. Die Anzahl von Kommunikationsgeräten, die durch ein Kommunikationssteuergerät gesteuert werden können, kann durch technische und/oder administrative Maßnahmen begrenzt sein. Wenn ein Kommunikationssteuergerät nur eine begrenzte Anzahl von Kommunikationsgeräten steuern kann, führt dies dazu, dass die Größe eines Netzes von der Teilnehmerkapazität seines Kommunikationssteuergerätes beschränkt wird. Eine größere Anzahl von Kommunikationsgeräten kann durch Kombination von Einzelnetzen zu einem größeren Gesamtnetz erreicht werden. Es gibt zwei Möglichkeiten, um die dazu notwendige Brückenverbindung zwischen zwei Kommunikationssteuergeräten herzustellen. Eine Möglichkeit ist, dass ein Gerät in dem ersten Netz als Kommunikationssteuergerät und in dem zweiten Netz als gesteuertes Kommunikationsgerät fungiert. Eine andere Möglichkeit ist, zwei Kommunikationssteuergeräte über ein gesteuertes Kommunikationsgerät zu verbinden. Hierbei können verschiedene Netztopologien erreicht werden, beispielsweise Baum-, Ketten- oder maschenförmige Topologie.

Eine Realisierung eines drahtungebundenen Netzes nach dem zweiten Verfahren am Technion, Israel Institute of Technology in Haifa, benötigt beim Start jedes Gerätes die Information, ob es als Kommunikationssteuergerät oder als gesteuertes Kommunikationsgerät betrieben werden soll. Durch die Positionierung und die Reihenfolge, in der die Geräte eingeschaltet werden, lassen sich dann verschiedene Topologien erzeugen (http://www-comnet.technion.ac.il/-cn9w02). An der ETH Zürich wurde ein solches Netz mit einer Baumtopologie aufgebaut (http://www.tik.ee.ethz.ch/-beutel/bt_node.html). Der Formationsalgorithmus ist nicht näher bekannt.

Nachteilig bei diesen Verfahren ist, dass einem Kommunikationsgerät, welches eine Verbindung aufbauen möchte, keine Informationen über die lokale Topologie des Netzes zur Verfügung stehen. Dies kann dazu führen, dass ein einzelnes Kommunikationsgerät oder ganze Teilnetze nicht in das Gesamtnetz integriert werden. Des Weiteren kann der Aufbau eines Netzes nur statisch erreicht werden und wird damit den dynamischen Anforderungen bei einer drahtungebundenen Übertragung mit mehreren Kommunikationsgeräten nicht gerecht.

Aus der Druckschrift Petrioli, C. et al.: »Configuring BlueStars: Mutlihop Scatternet Formation for Bluetooth Networks« in: IEEE Transactions on Computers, Band 52, Nr. 6, Juni 2003, Seiten 779-790, geht ein Verfahren hervor, in dem zunächst ein Kommunikationsgerät alle in seiner Reichweite liegenden anderen Kommunikationsgeräte ermittelt und entsprechende Piconetze gebildet werden. Dabei instruiert ein Master seine zugeordneten Slaves, alle anderen in der Reichweite des jeweiligen Slaves liegenden Master zu rufen und gleichfalls für den anderen Master als Slave zu fungieren. Damit wird ein Scatternetz gebildet, in dem zwei Piconetze durch einen gemeinsamen Slave miteinander verbunden werden.

Aus der Druckschrift Salonidis, T. et al.: »Distributed Topology Construction of Bluetooth Personal Area Networks« in: Proceedings IEEE Infocom 2001, Band 1, Conf. 20, 22. April 2001, Seiten 1577-1586, geht ein Verfahren zur Bildung eines Bluetooth-Scatternetzes hervor, bei dem ein Koordinator ermittelt wird. Für den Fall, dass mehr als 7 Slaves dem Netz angehören, werden weitere Master bestimmt und ein temporäres Piconetz aus dem Koordinator, welcher sodann zum Master wird, und den Masters, welche sodann zu Slaves werden, gebildet. Der Koordinator ermittelt für jeden Master eine Verbindungsliste, bestehend aus einer »Slave-Teilliste« und einer »Bridge-Teilliste«, die an die entsprechenden Master übermittelt wird. Die Masters bilden ihre Piconetze aus den ihnen mitgeteilten Slaves, wobei diese Piconetze durch die vom Koordinator als »Bridges« gekennzeichneten Kommunikationsgeräte miteinander verbunden werden und wobei diese sodann das Scatternetz bilden.

Der vorliegenden Erfindung liegt die Aufgabe zugrunde, ein Verfahren anzugeben, durch das sich ein mehrere Kommunikationsgeräte umfassendes Gesamtnetz selbst organisieren kann und beim Aufbau dieses Netzes noch nicht verbundene einzelne Kommunikationsgeräte und/oder Teilnetze miteinbezogen werden.

Diese Aufgabe wird erfindungsgemäß durch ein Verfahren mit den in Anspruch 1 angegebenen Merkmalen gelöst. Vorteilhafte Weiterbildungen der Erfindung sind in den abhängigen Ansprüchen angegeben.

Ein wesentlicher Aspekt der Erfindung ist die Ermittlung der lokalen Topologieinformation. Entsprechend dem erfindungsgemäßen Verfahren nach Anspruch 1 wird dies durch einen Nachrichtenaustausch zwischen den Kommunikationsgeräten erreicht. Ein erstes Kommunikationsgerät sendet hierzu eine Anfragenachricht mit einer Liste von Kennungen weiterer Kommunikationsgeräte, zu denen eine Verbindung aufbaubar ist, an mit diesem verbundene zweite Kommunikationsgeräte. Zumindest ein zweites Kommunikationsgerät, bei dem eine Verbindung zwischen dem zweiten Kommunikationsgerät und einem der weiteren Kommunikationsgeräte, die in der Anfragenachricht gekennzeichnet sind, besteht und/oder das selbst ein in der Anfragenachricht gekennzeichnetes Kommunikationsgerät ist, sendet eine Antwortnachricht an das erste Kommunikationsgerät. Aus der Antwortnachricht sind die Kennungen der mit dem zweiten Kommunikationsgerät verbundenen weiteren Kommunikationsgeräte ermittelbar und/oder es ist die Kennung des zweiten Kommunikationsgerätes entnehmbar, falls dieses selber ein in der Anfragenachricht gekennzeichnetes Kommunikationsgerät ist.

Das erste Kommunikationsgerät fordert den Aufbau einer Verbindung zu zumindest einem weiteren Kommunikationsgerät an, das in der Anfragenachricht gekennzeichnet ist und zu dem keine Verbindung seitens eines zweiten Kommunikationsgerätes besteht. Bei erfolgreicher Anforderung erfolgt ein Verbindungsaufbau.

Unter Kommunikationsgeräten sind beispielsweise ohne Beschränkung der Allgemeinheit dieses Begriffs PCs und Computer-Peripheriegeräte, mobile Geräte (Laptop, Handheld- PC, PDAs), Telekommunikationsgeräte (Handy, ISDN-Anlagen), Video-und TV-Geräte, Audiogeräte und Haushaltsgeräte (Waschmaschine, Kühlschrank) zu verstehen. Vernetzt werden können diese Geräte beispielsweise mit IrDA, Bluetooth oder WLAN Modulen.

Entsprechend einer weiteren vorteilhaften Ausgestaltung der vorliegenden Erfindung werden in der Antwortnachricht des zweiten Kommunikationsgerätes die Kennungen der mit dem zweiten Kommunikationsgerät verbundenen weiteren in der Anfragenachricht gekennzeichneten Kommunikationsgeräte aufgelistet, und/oder es wird die Kennung des zweiten Kommunikationsgerätes aufgelistet, falls dieses selber ein Kommunikationsgerät aus der Anfragenachricht ist. Dies erfordert weniger Speicherplatzbedarf und gewährleistet somit einen rascheren und effizienteren Nachrichtenaustausch.

In vorteilhafter Weise wird über eine Schrittweite beim Nachrichtenaustausch, die die Anzahl der Kommunikationsgeräte bezeichnet, über die eine Anfragenachricht innerhalb einer Netztopologie gesendet wird, die Maschenweite eines drahtungebundenen Netzes beeinflusst. Hierbei entsteht eine maschenförmige Topologie des Netzes. Je größer die Schrittweite, umso grobmaschiger das Gesamtnetz. Maschenförmige Topologien bieten den Vorteil, dass sie ausfallsicherer sind als andere Topologien, wie Baum- oder Kettentopologie. Wenn eine Route in einem Netz ausfällt, gibt es immer noch die Möglichkeit einer zweiten möglichen Route. Bei Ausfall eines Gerätes oder eines Teilnetzes, kann das Gesamtnetz in der Regel schon nach dem nächsten Nachrichtenaustausch eines beteiligten Kommunikationsgerätes repariert werden. Ein zusätzlicher Vorteil einer maschenförmigen Topologie ist die schnellere Weiterleitung von Daten. Durch die mehreren möglichen Routen bei einer Verbindung zwischen zwei Geräten, entsteht eine geringere Verkehrslast auf einzelnen Geräten/Routen. Außerdem sind die Routen zwischen zwei Geräten durch die Vermaschung in der Regel kürzer als beispielsweise bei einer Kettentopologie.

Entsprechend einer vorteilhaften Weiterbildung der vorliegenden Erfindung wird die lokale Topologieinformation durch einen Nachrichtenaustausch zwischen den Kommunikationssteuergeräten ermittelt.
Ein erstes Kommunikationssteuergerät sendet eine Anfragenachricht mit einer Liste von Kennungen weiterer Kommunikationsgeräte, zu denen eine Verbindung aufbaubar ist, über ein durch ein Kommunikationssteuergerät gesteuertes Kommunikationsgerät an mit diesem verbundene zweite Kommunikationssteuergeräte. Zumindest ein zweites Kommunikationssteuergerät, bei dem eine Verbindung zwischen dem zweiten Kommunikationssteuergerät und einem der weiteren Kommunikationsgeräte, die in der Anfragenachricht gekennzeichnet sind, besteht und/oder das selbst ein in der Anfragenachricht gekennzeichnetes Kommunikationsgerät ist, schickt eine Antwortnachricht an das erste Kommunikationssteuergerät. Aus der Antwortnachricht sind die Kennungen der mit dem zweiten Kommunikationssteuergerät verbundenen weiteren Kommunikationsgeräte ermittelbar und/oder es ist die Kennung des zweiten Kommunikationssteuergerätes entnehmbar, falls dieses selber ein in der Anfragenachricht gekennzeichnetes Kommunikationsgerät ist.

Das erste Kommunikationssteuergerät fordert den Aufbau einer Verbindung zu zumindest einem weiteren Kommunikationsgerät an, das in der Anfragenachricht gekennzeichnet ist und zu dem keine Verbindung seitens eines zweiten Kommunikationssteuergerätes besteht. Bei erfolgreicher Anforderung erfolgt ein Verbindungsaufbau.

Unter Kommunikationssteuergeräten wird beispielsweise ohne Beschränkung der Allgemeinheit dieses Begriffs ein Master-Gerät nach dem Bluetooth Kommunikationsprotokoll oder eine primary station nach dem IrDA Kommunikationsprotokoll verstanden. Ein gesteuertes Kommunikationsgerät entspricht demgemäß nach dem Bluetooth Protokoll einem Slave-Gerät und nach dem IrDA Protokoll einer secondary station.

Die vorliegende Erfindung wird nachfolgend an einem Ausführungsbeispiel anhand der Zeichnung erläutert. Es zeigt
- Figur 1: eine schematische Darstellung einer beispielhaften Netztopologie mit mehreren Kommunikationssteuerge- räten und gesteuerten Kommunikationsgeräten,
- Figur 2: eine schematische Darstellung der Netztopologie aus Figur 1 nach Ablauf des Algorithmus mit der Schrittweite n=2,
- Figur 3: eine schematische Darstellung der Netztopologie aus Figur 1 nach Ablauf des Algorithmus mit der Schrittweite n=4.

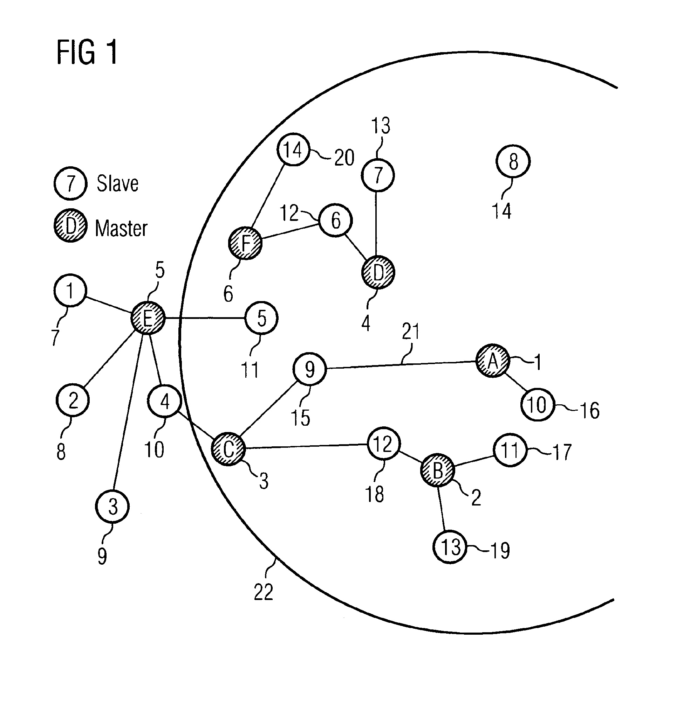

In den Figuren 1-3 symbolisieren die sechs schwarz eingefärbten Kreise die Kommunikationssteuergeräte und die vierzehn weiß eingefärbten Kreise die gesteuerten Kommunikationsgeräte. Hierbei können sich zwei Kommunikationssteuergeräte oder zwei gesteuerte Kommunikationsgeräte nicht direkt miteinander verbinden. Eine Verbindung zwischen zwei Kommunikationssteuergeräten ist nur über ein Kommunikationsgerät möglich, welches in diesem Ausführungsbeispiel mit maximal zwei Kommunikationssteuergeräten verbunden sein kann. Im allgemeinen ist die Anzahl der Kommunikationssteuergeräte, die über ein gesteuertes Kommunikationsgerät verbunden sein können, erweiterbar. Im folgenden Ausführungsbeispiel werden die gesteuerten Kommunikationsgeräte vereinfachend als Kommunikationsgeräte bezeichnet. Als Sammelbegriff für Kommunikationssteuergeräte und gesteuerte Kommunikationsgeräte wird Geräte verwendet.

In Figur 1 ist ein Teilnetz mit vier Kommunikationssteuergeräten 1,2,3,5 und zehn Kommunikationsgeräten 7,8,9,10,11,15, 16,17,18,19, ein nicht mit diesem verbundenes Teilnetz mit zwei Kommunikationssteuergeräten 4,6 und drei Kommunikationsgeräten 12,13,20 und ein einzelnes Kommunikationsgerät 14 dargestellt. Der eingezeichnete Teilkreis 22 veranschaulicht graphisch die Reichweite des Kommunikationssteuergerätes 1. Eine durchgezogene Linie 21 symbolisiert eine bestehende Verbindung zwischen den Geräten, im Beispiel für die Linie 21 eine Verbindung zwischen dem Kommunikationssteuergerät 1 und dem Kommunikationsgerät 15.

Das Kommunikationssteuergerät 1 erhält als ersten Schritt eine Liste mit den Kennungen der Geräte 14,16,17,19,2, 18,3,15,11,4,6,12,20,13 innerhalb seiner Reichweite. Das Kommunikationssteuergerät 1 entfernt zunächst die Kennungen der Kommunikationsgeräte 15 und 16, mit denen es direkt verbunden ist, aus seiner Liste, die somit die Kennungen der Geräte 14,17,19,2,18,3,11,4,6,12,20,13 enthält.

Der Ablauf des Algorithmus wird exemplarisch einmal für die Schrittweite n=2 und einmal für die Schrittweite n=4 betrachtet.

### n=2:

Nachdem Kommunikationssteuergerät 1 die Liste an die mit ihm innerhalb der Schrittweite n=2 verbundenen Kommunikationssteuergeräte gesandt hat, erhält es vom Kommunikationssteuergerät 3 die Antwortnachricht mit den Geräten 3,18. Nach Erhalt der Nachricht streicht das Kommunikationssteuergerät 1 die in der Antwortnachricht genannten Kennungen aus seiner Liste, die somit die Kennungen der Geräte 14,17,19, 2, 11, 4, 6, 12, 20, 13 enthält.

Das Kommunikationssteuergerät 1 baut erfolgreich eine Verbindung zu Kommunikationsgerät 14 auf. Es wird nun eine neue Anfragenachricht mit den Kennungen der Geräte 17,19,2,11,4, 6,12,20,13 generiert. Es gibt im vorliegenden Beispiel keine Antwortnachricht, da das Kommunikationsgerät 14 keine Verbindung zu einem anderen Kommunikationssteuergerät als Kommunikationssteuergerät 1 aufweist.

Das Kommunikationssteuergerät 1 baut nun eine Verbindung zu Kommunikationsgerät 17 auf, was auch gelingt. Es wird nun eine neue Anfragenachricht mit den Kennungen der folgenden Geräte 19,2,11,4,6,12,20,13 generiert und verschickt. Das Kommunikationssteuergerät 1 erhält eine Antwortnachricht vom Kommunikationssteuergerät 2 mit den Kennungen der Geräte 2,19. Nach Erhalt der Nachricht streicht das Kommunikationssteuergerät 1 die in der Antwortnachricht genannten Kennungen aus seiner Liste, die somit die Kennungen der Geräte 11,4,6,12,20,13 enthält.

Das Kommunikationssteuergerät 1 baut erfolgreich eine Verbindung zu Kommunikationsgerät 11 auf. Es wird nun eine neue Anfragenachricht mit den Kennungen der Geräte 4,6,12,20,13 generiert und verschickt. Obwohl das Kommunikationsgerät 11 mit dem Kommunikationssteuergerät 5 verbunden ist, erhält das Kommunikationssteuergerät 1 keine Antwortnachricht von Kommunikationssteuergerät 5, da kein dem Kommunikationssteuergerät 5 bekanntes Gerät Teil der Anfragenachricht ist.

Nun versucht das Kommunikationssteuergerät 1 eine Verbindung zum Kommunikationssteuergerät 4 aufzubauen, was aber misslingt, da das Kommunikationssteuergerät 4 selbst ein Kommunikationssteuergerät ist. Das Kommunikationssteuergerät 4 wird aus der Liste gestrichen. Aus demselben Grund scheitert der Versuch eine Verbindung zum Kommunikationssteuergerät 6 aufzubauen. Das Kommunikationssteuergerät 6 wird aus der Liste gestrichen. Der Verbindungsaufbau zum Kommunikationsgerät 12 schlägt ebenfalls fehl, da das Kommunikationsgerät 12 schon mit zwei Kommunikationssteuergeräten verbunden ist. Das Kommunikationsgerät 12 wird aus der Liste gestrichen.

Das Kommunikationssteuergerät 1 baut erfolgreich eine Verbindung zum Kommunikationsgerät 20 auf. Es wird nun eine Anfragenachricht mit der Kennung des Kommunikationsgerätes 13 generiert und verschickt. Obwohl das Kommunikationsgerät 13 mit dem Kommunikationssteuergerät 6 verbunden ist, erhält das Kommunikationssteuergerät 1 keine Antwortnachricht von Kommunikationssteuergerät 6, da kein Gerät vom Kommunikationssteuergerät 1 nachgefragt wurde, mit dem das Kommunikationssteuergerät 6 entweder direkt verbunden ist oder das es selber ist.

Das Kommunikationssteuergerät 1 baut erfolgreich eine Verbindung zum Kommunikationsgerät 13 auf. Kommunikationsgerät 13 wird aus der Liste gestrichen, die somit leer ist. Der Ablauf des Algorithmus ist damit beendet.

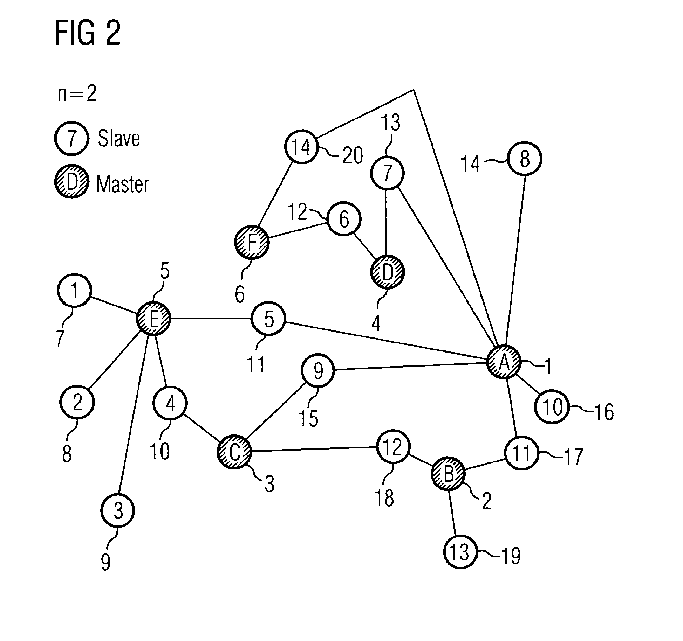

Figur 2 zeigt die Netztopologie aus Figur 1 nachdem der oben beschriebene Algorithmus mit der Schrittweite n=2 ausgeführt wurde. Es zeigt sich, dass das einzelne Kommunikationsgerät 14 und das Teilnetz mit den Geräten 4,6,12,13,20 vom Kommunikationssteuergerät 1 in das Netz integriert wurden.

### n=4:

Nachdem das Kommunikationssteuergerät 1 die Liste an die mit ihm innerhalb der Schrittweite n=4 verbundenen Kommunikationssteuergeräte gesandt hat, erhält es vom Kommunikationssteuergerät 3 die Antwortnachricht mit den Kennungen der Geräte 3,18, vom Kommunikationsteuergerät 2 die Antwortnachricht mit den Kennungen der Geräte 2,18,17,19 und vom Kommunikationssteuergerät 5 die Antwortnachricht mit der Kennung des Kommunikationsgerätes 11. Nach Erhalt der Nachricht streicht das Kommunikationssteuergerät 1 die in der Antwortnachricht genannten Kennungen aus seiner Liste, die somit die Kennungen der Geräte 14,4,6,12,20,13 enthält.

Das Kommunikationssteuergerät 1 baut erfolgreich eine Verbindung zum Kommunikationsgerät 14 auf. Es wird nun eine neue Anfragenachricht mit den Kennungen der folgenden Geräte 4,6,12,20,13 generiert. Es gibt keine Antwortnachricht, da das Kommunikationsgerät 14 keine Verbindung zu einem anderen Kommunikationssteuergerät als Kommunikationssteuergerät 1 aufweist.

Nun versucht das Kommunikationssteuergerät 1 eine Verbindung zum Kommunikationssteuergerät 4 aufzubauen, was aber misslingt, da das Kommunikationssteuergerät 4 selbst ein Kommunikationssteuergerät ist. Das Kommunikationssteuergerät 4 wird aus der Liste gestrichen. Aus demselben Grund scheitert der Versuch eine Verbindung zum Kommunikationssteuergerät 6 aufzubauen. Das Kommunikationssteuergerät 6 wird aus der Liste gestrichen. Der Verbindungsaufbau zum Kommunikationsgerät 12 schlägt ebenfalls fehl, da das Kommunikationsgerät 12 schon mit zwei Kommunikationssteuergeräten verbunden ist. Das Kommunikationsgerät 12 wird aus der Liste gestrichen.

Das Kommunikationssteuergerät 1 baut erfolgreich eine Verbindung zum Kommunikationsgerät 20 auf. Es wird nun eine Anfragenachricht mit der Kennung des Kommunikationsgerätes 13 generiert und verschickt. Da das Kommunikationsgerät 20 mit Kommunikationssteuergerät 6 verbunden ist und wegen der Schrittweite n=4 so auch das Kommunikationssteuergerät 4 erreicht wird, erhält Kommunikationssteuergerät 1 die Antwortnachricht vom Kommunikationssteuergerät 4 mit der Kennung des Kommunikationsgerätes 13. Das Kommunikationsgerät 13 wird aus der Liste gestrichen, die somit leer ist. Der Ablauf des Algorithmus ist damit beendet.

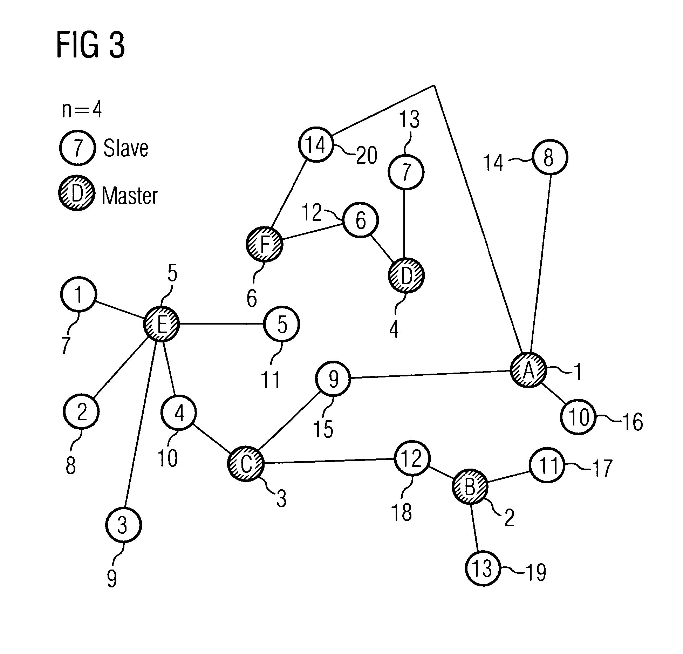

Figur 3 zeigt die Netz-Topologie aus Figur 1 nachdem der oben beschriebene Algorithmus mit der Schrittweite n=4 ausgeführt wurde. Es zeigt sich, dass das einzelne Kommunikationsgerät 14 und das Teilnetz mit den Geräten 4,6,12,13,20 vom Kommunikationssteuergerät 1 in das Netz integriert wurden. Außerdem wird im Vergleich zu Figur 2 deutlich, dass durch den Algorithmus mit der größeren Schrittweite n=4 eine grobmaschigere Topologie entstanden ist.

Die Anwendung der vorliegenden Erfindung ist nicht auf die hier beschriebenen Ausführungsbeispiele beschränkt.

## Patentansprüche

1. Verfahren zum Aufbau eines drahtungebundenen Netzes, bei dem
- ein erstes Kommunikationsgerät (1) eine Anfragenachricht mit einer Liste von Kennungen weiterer Kommunikationsgeräte (14, 17, 19, 2, 18, 3, 11, 4, 6, 12, 20, 13), zu denen eine Verbindung aufbaubar ist, an mit diesem verbundene zweite Kommunikationsgeräte (14, 17, 19, 2, 18, 3, 11, 4, 6, 12, 20, 13) übermittelt,
- zumindest ein zweites Kommunikationsgerät (3) eine Antwortnachricht an das erste Kommunikationsgerät (1) sendet, falls eine Verbindung zwischen dem zweiten Kommunikationsgerät (3) und einem der weiteren Kommunikationsgeräte (14, 17, 19, 2, 18, 3, 11, 4, 6, 12, 20, 13), die in der Anfragenachricht **gekennzeichnet** sind, besteht und/oder falls das zweite Kommunikationsgerät ein in der Anfragenachricht **gekennzeichnet**es Kommunikationsgerät (14, 17, 19, 2, 18, 3, 11, 4, 6, 12, 20, 13) ist,
- aus der Antwortnachricht die Kennungen der mit dem zweiten Kommunikationsgerät (3) verbundenen weiteren in der Anfragenachricht **gekennzeichnet**en Kommunikationsgeräte ermittelbar sind und/oder die Kennung des zweiten Kommunikationsgerätes (3) entnehmbar ist, falls dieses selber ein in der Anfragenachricht **gekennzeichnet**es Kommunikationsgerät (14, 17, 19, 2, 11, 4, 6, 12, 20, 13) ist,
- das erste Kommunikationsgerät (1) einen Aufbau einer Verbindung zu zumindest einem weiteren Kommunikationsgerät (14) anfordert, das in der Anfragenachricht **gekennzeichnet** ist und zu dem keine Verbindung seitens eines zweiten Kommunikationsgerätes (3) besteht,
- bei erfolgreicher Anforderung ein Verbindungsaufbau erfolgt.

2. Verfahren nach Anspruch 1,
bei dem in der Antwortnachricht des zweiten Kommunikationsgerätes die Kennungen der mit dem zweiten Kommunikationsgerät verbundenen weiteren in der Anfragenachricht **gekennzeichnet**en Kommunikationsgeräte (14, 17, 19, 2, 18, 3, 11, 4, 6, 12, 20, 13) aufgelistet sind und/oder die Kennung des zweiten Kommunikationsgerätes (2)aufgelistet ist, falls dieses selber ein Kommunikationsgerät aus der Anfragenachricht ist.

3. Verfahren nach Anspruch 1,
bei dem in der Antwortnachricht des zweiten Kommunikationsgerätes (3) die Kennungen der mit dem zweiten Kommunikationsgerät nicht verbundenen weiteren in der Anfragenachricht **gekennzeichnet**en Kommunikationsgeräte (14, 17, 19, 2, 18, 3, 11, 4, 6, 12, 20, 13) aufgelistet sind und/oder die Kennung des zweiten Kommunikationsgerätes (14, 17, 19, 2, 18, 3, 11, 4, 6, 12, 20, 13) aufgelistet ist, falls dieses nicht selber ein Kommunikationsgerät aus der Anfragenachricht ist.

4. Verfahren nach Anspruch 1,
bei dem eine Schrittweite beim Nachrichtenaustausch festlegbar ist, die die Anzahl der Kommunikationsgeräte bezeichnet, über die eine Anfragenachricht innerhalb einer Netztopologie gesendet wird.

5. Verfahren nach Anspruch 1,
bei dem
- erstes und zweites Kommunikationsgerät (1, 3) einem Kommunikationssteuergerät entsprechen,
- eine Verbindung zwischen Kommunikationssteuergeräten (1, 3) über ein durch ein Kommunikationssteuergerät (1, 3) gesteuertes Kommunikationsgerät aufgebaut wird.

6. Verfahren nach Anspruch 1,
bei dem nach der Bluetooth Core Specification Version 1.2 ein Kommunikationssteuergerät (1, 3) einem Master entspricht und ein durch ein Kommunikationssteuergerät gesteuertes Kommunikationsgerät einem Slave entspricht.

7. Verfahren nach Anspruch 1,
bei dem
- erstes und zweites Kommunikationsgerät (1, 3) einem Master entsprechen,
- bei einer Verbindung zwischen zwei Mastern, ein Kommunikationsgerät sowohl als Master als auch als Slave fungiert (Master/Slave-Bridge).

8. Verfahren nach Anspruch 1,
bei dem die Kennung von Geräten einer Medium-Access-Control Adresse entspricht.

## Claims

1. Method for setting up a non-wired network, in which
- a first communication device (1) sends a query message containing a list of identification codes of further communication devices (14, 17, 19, 2, 18, 3, 11, 4, 6, 12, 20, 13), to which a connection can be set up, to second communication devices (14, 17, 19, 2, 18, 3, 11, 4, 6, 12, 20, 13) which are connected to said first communication device,
- at least one second communication device (3) sends a reply message to the first communication device (1) if a connection exists between the second communication device (3) and one of the further communication devices (14, 17, 19, 2, 18, 3, 11, 4, 6, 12, 20, 13) identified in the query message and/or if the second communication device is a communication device (14, 17, 19, 2, 18, 3, 11, 4, 6, 12, 20, 13) identified in the query message,
- from the reply message, it is possible to determine the identification codes of the further communication devices which are identified in the query message and are connected to the second communication device (3), and/or to extract the identification code of the second communication device (3) if this is itself a communication device (14, 17, 19, 2, 11, 4, 6, 12, 20, 13) which is identified in the query message,
- the first communication device (1) requests a setting up of a connection to at least one further communication device (14) which is identified in the query message and to which no connection exists from a second communication device (3),
- a successful request results in a connection setup.

2. Method according to claim 1,
in which the identification codes of the further communication devices (14, 17, 19, 2, 18, 3, 11, 4, 6, 12, 20, 13) which are identified in the query message and are connected to the second communication device are listed in the reply message of the second communication device and/or the identification code of the second communication device (2) is listed in said reply message if this second communication device is itself a communication device from the query message.

3. Method according to claim 1,
in which the identification codes of the further communication devices (14, 17, 19, 2, 18, 3, 11, 4, 6, 12, 20, 13) which are identified in the query message but are not connected to the second communication device are listed in the reply message of the second communication device (3) and/or the identification code of the second communication device (14, 17, 19, 2, 18, 3, 11, 4, 6, 12, 20, 13) is listed in said reply message if this second communication device is not itself a communication device from the query message.

4. Method according to claim 1,
in which a step size can be specified for the message exchange, wherein said step size defines the number of communication devices via which a query message is sent within a network topology.

5. Method according to claim 1,
in which
- first and second communication device (1, 3) correspond to a communication control device,
- a connection between communication control devices (1, 3) is set up via a communication device which is controlled by a communication control device (1, 3).

6. Method according to claim 1,
in which according to the Bluetooth Core Specification Version 1.2 a communication control device (1, 3) corresponds to a master and a communication device which is controlled by a communication control device corresponds to a slave.

7. Method according to claim 1,
in which
- first and second communication device (1, 3) correspond to a master,
- in the case of a connection between two masters, a communication device functions as both master and slave (master/slave bridge).

8. Method according to claim 1,
in which the identification code of devices corresponds to a Medium Access Control address.

## Revendications

1. Procédé pour configurer un réseau sans fil, dans lequel
- un premier appareil de communication (1) transmet un message de requête avec une liste d'identifiants d'autres appareils de communication (14, 17, 19, 2, 18, 3, 11, 4, 6, 12, 20, 13) avec lesquels il est possible d'établir une liaison à des deuxièmes appareils de communication (14, 17, 19, 2, 18, 3, 11, 4, 6, 12, 20, 13) qui sont reliés à celui-ci,
- au moins un deuxième appareil de communication (3) envoie un message de réponse au premier appareil de communication (1) s'il existe une liaison entre le deuxième appareil de communication (3) et l'un des autres appareils de communication (14, 17, 19, 2, 18, 3, 11, 4, 6, 12, 20, 13) qui sont désignés dans le message de requête et/ou si le deuxième appareil de communication est un appareil de communication (14, 17, 19, 2, 18, 3, 11, 4, 6, 12, 20, 13) désigné dans le message de requête,
- les identifiants des autres appareils de communication désignés dans le message de requête et reliés au deuxième appareil de communication (3) peuvent être déterminés à partir du message de réponse et/ou l'identifiant du deuxième appareil de communication (3) peut être tiré dudit message de réponse si ledit deuxième appareil de communication est lui-même un appareil de communication (14, 17, 19, 2, 11, 4, 6, 12, 20, 13) désigné dans le message de requête ;
- le premier appareil de communication (1) demande un établissement de liaison vers au moins un autre appareil de communication (14) qui est désigné dans le message de requête et avec lequel un deuxième appareil de communication (3) n'entretient aucune liaison,
- il y a établissement d'une liaison si la requête aboutit.

2. Procédé selon la revendication 1, dans lequel les identifiants des autres appareils de communication (14, 17, 19, 2, 18, 3, 11, 4, 6, 12, 20, 13) désignés dans le message de requête et reliés au deuxième appareil de communication sont listés dans le message de réponse du deuxième appareil de communication et/ou l'identifiant du deuxième appareil de communication (2) est listé dans ledit message de réponse si ledit deuxième appareil de communication est lui-même un appareil de communication qui ressort du message de requête.

3. Procédé selon la revendication 1, dans lequel les identifiants des autres appareils de communication (14, 17, 19, 2, 18, 3, 11, 4, 6, 12, 20, 13) désignés dans le message de requête et non reliés au deuxième appareil de communication sont listés dans le message de réponse du deuxième appareil de communication (3) et/ou l'identifiant du deuxième appareil de communication (14, 17, 19, 2, 18, 3, 11, 4, 6, 12, 20, 13) est listé dans ledit message de réponse si ledit deuxième appareil de communication n'est pas lui-même un appareil de communication du message de requête.

4. Procédé selon la revendication 1, dans lequel est déterminé, à l'échange de messages, un pas qui indique le nombre des appareils de communication via lesquels un message de requête est émis au sein d'une topologie de réseau.

5. Procédé selon la revendication 1, dans lequel
- le premier et le deuxième appareil de communication (1, 3) correspondent à un appareil de commande de communication ;
- une liaison entre appareils de communication (1, 3) est établie via un appareil de communication commandé par un appareil de commande de communication (1, 3).

6. Procédé selon la revendication 1, dans lequel, conformément à la spécification Bluetooth Core Specification Version 1.2, un appareil de commande de communication (1, 3) correspond à un maître et un appareil de communication commandé par un appareil de commande de communication correspond à un esclave.

7. Procédé selon la revendication 1, dans lequel
- le premier et le deuxième appareil de communication (1, 3) correspondent à un maître ;
- étant donné une liaison entre deux maîtres, un appareil de communication fait office non seulement de maître, mais aussi d'esclave (Master/Slave-Bridge).

8. Procédé selon la revendication 1, dans lequel l'identifiant d'appareils correspond à une adresse Medium Access Control.
